Europäisches Patentamt

European Patent Office

Office européen des brevets

(11) Veröffentlichungsnummer: **0 156 324**
**A2**

# (12) EUROPÄISCHE PATENTANMELDUNG

(21) Anmeldenummer: **85103380.3**

(22) Anmeldetag: **22.03.85**

(51) Int. Cl.⁴: **A 23 G 1/21**
**A 23 G 1/24**

(30) Priorität: **30.03.84 DE 3411815**

(43) Veröffentlichungstag der Anmeldung:
**02.10.85 Patentblatt 85/40**

(84) Benannte Vertragsstaaten:
**AT BE CH DE FR GB IT LI LU NL SE**

(71) Anmelder: **Gebr. Bindler Maschinenfabrik GmbH & Co. KG**
**Kölner Strasse 102-106**
**D-5275 Bergneustadt/Rhld.1(DE)**

(72) Erfinder: **Bender, Hans-Jürgen, Dipl.-Ing.**
**Am Gallenberg 5**
**D-5960 Olpe(DE)**

(72) Erfinder: **Bindler, Uwe, Dipl.-Ing.**
**Wilhelmstrasse 47**
**D-5275 Bergneustadt(DE)**

(74) Vertreter: **Patentanwaltsbüro Cohausz & Florack**
**Schumannstrasse 97**
**D-4000 Düsseldorf 1(DE)**

(54) **Anlage zum Herstellen von Schokoladen-Artikeln.**

(57) Die Erfindung betrifft eine Anlage zum Herstellen von Schokoladen-Artikeln. Bisher werden flüssige Schokoladenmasse enthaltende Formen in jeweils getrennten Arbeitsstationen entgast, gewendet, ausgeschleudert und rückgewendet, um Hohlkörper aus Schokoladenmasse herzustellen. Dies ist sehr aufwendig und erfordert viel Raum. Demgegenüber schlägt die Erfindung vor, daß das Entgasen, Wenden, Ausschleudern und Rückwenden in einer einzigen, den Rüttler aufweisenden Wendeeinrichtung erfolgt, deren Halterahmen nach dem Entgasen um eine horizontale Achse aus der Transportbahnebene heraus nach unten schwenkbar und nach dem Ausschleudern in die Ausgangslage rückschwenkbar ist. Somit können die genannten Arbeitsvorgänge insgesamt innerhalb einer einzigen Arbeitsstation ausgeführt werden. Es ergeben sich ein entsprechend geringerer Raumbedarf und ein wesentlich niedrigerer technischer Aufwand.

Fig. 1

EP 0 156 324 A2

## Anlage zum Herstellen von Schokoladen-Artikeln

Die Erfindung betrifft eine Anlage zum Herstellen
von Schokoladen-Artikeln, mit auf einer Transportbahn herangeführten Formen, deren Formennester mit
Schokoladenmasse gefüllt sind, und mit im Verlauf
der Transportbahn vorgesehenen Arbeitsstationen
zum Rütteln, Wenden, Ausschleudern, Rückwenden und
Reinigen der Formen, unter Anwendung eines Rüttlers
und einer Wendeeinrichtung, in der jeweils eine Form
auf einem in der Transportebene befindlichen Halterahmen festgehalten und mit diesem um 180$^{\circ}$ gewendet
wird.

Bei der Herstellung von Schokoladen-Artikeln ist es
erforderlich, die noch flüssige Schokoladenmasse zunächst zu entgasen. Dies erfolgt durch Rütteln der
Formen in einer allein diesem Zweck dienenden Arbeitsstation. Anschließend werden die Formen einer weiteren
Arbeitsstation zugeführt, in der sie gewendet und ausgeschleudert werden. Während hierbei die im mittleren
Bereich der Formennester befindliche Schokolade die
Form wieder verläßt, bleibt die im Rand- beziehungsweise Wandungsbereich befindliche Schokolade in den
Formennestern haften, so daß ein Hohlkörper - auch
Hülse genannt - entsteht. In einer nächsten Arbeitsstation erfolgt das Rückwenden der Formen, die anschließend einer Kühleinrichtung zugeführt werden.

Es wird für ein derartiges Herstellungsverfahren also
eine Anlage mit einer entsprechenden Anzahl von Arbeitsstationen benötigt. Der hierzu erforderliche technische
Aufwand und auch der durch die einzelnen Arbeitsstationen bedingte Raumbedarf sind verhältnismäßig groß.

Hiervon ausgehend war es Aufgabe der vorliegenden
Erfindung, den für eine derartige Anlage erforderlichen technischen Aufwand sowie den Raumbedarf
wesentlich zu verringern.

Zur Lösung dieser Aufgabe wird erfindungsgemäß vorgeschlagen, daß das Entgasen, Wenden, Ausschleudern
und Rückwenden in einer einzigen, den Rüttler aufweisenden Wendeeinrichtung erfolgt, deren Halterahmen
nach dem Entgasen um eine horizontale Achse aus der
Transportbahnebene heraus nach unten schwenkbar und
nach dem Ausschleudern in die Ausgangslage rückschwenkbar ist.

Alle genannten Arbeitsabläufe können somit in einer
einzigen Arbeitsstation stattfinden. Es genügt hierzu ein einziger Rüttler in der Wendeeinrichtung. Dieser tritt zunächst in Tätigkeit, um vor dem Wenden
die Entgasung zu bewirken. Nach dem Wenden kann das
Ausschleudern mit Hilfe desselben Rüttlers erfolgen.

Aufgrund der geringeren Anzahl von Arbeitsstationen
werden der technische Aufwand und der Raumbedarf
wesentlich herabgesetzt. Auch der Formentransport
selbst wird bedeutend vereinfacht.

Gemäß einer vorteilhaften Ausgestaltung der Erfindung kann die Schwenkachse unterhalb der Transportbahn und in einer zur Vorschubrichtung querverlaufenden Richtung angeordnet werden. Dies ist für
das Herausnehmen der einzelnen Form aus einem Formenverband und für das Rückführen der ausgeschleuderten Form in den Formenverband besonders günstig. Vorteilhaft kann hierbei die Schwenkachse gegenüber demjenigen Bereich, den der Halterahmen in der Transportbahnebene einnimmt, in Transportrichtung versetzt angeordnet sein. Hierdurch ergibt sich ein günstiger Verlauf der Schwenkbewegung während des Wendens beziehungsweise des Rückwendens einer Form.

In weiterer Ausgestaltung der Erfindung wird vorgeschlagen, daß der Halterahmen mittels federnder Elemente auf einem Grundrahmen abgestützt ist und daß der Rüttler am Grundrahmen befestigt ist und mit seinem in Schwingungen versetzen Teil am Halterahmen angreift. Hierdurch ergibt sich eine praktische und raumsparende Konstruktion.

Vorteilhaft ist es erfindungsgemäß ferner, wenn zumindest der wesentliche Anteil der vom Rüttler erzeugten Schwingungsamplitude in einer horizontalen Ebene und so verläuft, daß die Schwingungsamplitude quer zur Transportrichtung gerichtet ist. Es hat sich herausgestellt, daß diese Amplitudenrichtung nicht nur für das Ausschleudern, sondern insbesondere auch für das Entgasen zweckmäßig ist, wenn sich die jeweils zu entgasende Form in einem Formenverband befindet, in dem die Formen aneinanderliegend durch eine Vorschubeinrichtung transportiert werden.

Die federnden Elemente können erfindungsgemäß durch dünne Federstahlbleche gebildet sein, die den Halterahmen tragen. Hierdurch ergibt sich ein verhältnismäßig geringer technischer Aufwand für die federnd abgestützte Anordnung des Halterahmens.

Gemäß einer weiteren Ausgestaltung der Erfindung
wird vorgeschlagen, daß der Halterahmen zwei U-
förmige Führungsschienen aufweist, die eine Form
jeweils an ihren zur Transportrichtung parallelen
Seiten im Randbereich umgreifen, und daß zumindest
einer der horizontalen Schenkel einer Führungsschiene an beiden Enden jeweils einen beweglichen
Anschlag aufweist, der die Form hintergreift.

An sich ist eine in den Halterahmen eingeschobene
Form bereits aufgrund einer Reib- oder Klemmwirkung in
Transportrichtung gesehen ausreichend gehalten, die durch
eine seitlich angreifende federbeaufschlagte Druckleiste
bewirkt wird. Insbesondere während des Ausschleuderns
ist es jedoch nicht immer auszuschließen, daß die
Form aus den Führungsschienen in Längsrichtung derselben auswandert. Dies wird durch die Anschläge
zuverlässig verhindert.

Die entsprechende Betätigung der Anschläge ist in
vielfacher Weise denkbar. Die Erfindung hat jedoch
angestrebt, die Betätigung ohne zusätzliche Betätigungselemente zu bewirken. Dies wird erfindungsgemäß
dadurch erreicht, daß auf den oberen Schenkel einer
die Form umgreifenden Führungsschiene eine Federspange
aufgesetzt ist, daß die Federspange an ihren Enden jeweils mit einem in Höhe des U-förmigen Querschnitts der
Führungsschiene befindlichen Anschlag versehen ist und
daß die Anschläge jeweils eine nach unten gerichtete,
in Richtung auf das Anschlagende schräg nach oben geneigte Gleitfläche bilden.

Wenn sich der Halterahmen der Wendeeinrichtung in der
Transportbahnebene befindet, kann der in Transportrichtung vordere Anschlag auf die die nächstvordere Form
haltende Führungsleiste aufgleiten beziehungsweise aufgeschoben werden, so
daß der U-förmige Querschnitt frei ist. Dies erfolgt
beim Rückwenden einer Form. Der andere Anschlag, der
sich an der Einschubseite des Halterahmens befindet,
wird durch das Einschieben der jeweils nächsten Form
in den Halterahmen selbsttätig angehoben, wobei er
auf der Oberseite dieser Form gleitet. Beide Anschläge
werden also in der erforderlichen Weise
betätigt,
ohne daß zusätzliche Betätigungselemente erforderlich
sind.

Da diese Ausbildung mit Vorteil auch für Wendeeinrichtungen anderer Art anwendbar ist, wird hierfür
ein vom Gegenstand des Anspruchs 1 unabhängiger Schutz
beansprucht.

Weiterhin wird erfindungsgemäß vorgeschlagen, daß
zwischen einer das Einschieben einer Form in den
Halterahmen bewirkenden Vorschubeinrichtung und dem
Halterahmen in der Transportbahn eine Leerstelle vorgesehen ist, deren Länge der Länge einer Form entspricht, und daß der Vorschub jeweils der Länge zweier
Formen entspricht.

Hierdurch wird erreicht, daß sich hinter einer in den
Halterahmen der Wendeeinrichtung eingeschobenen Form
keine weitere Form befindet. Insbesondere dann, wenn
die Formen aneinanderliegend im Formenverband von der
Wendeeinrichtung aus weitertransportiert werden, wird
durch die entsprechende Leerstelle ein ausreichender
Freiraum geschaffen, um den Halterahmen wenden zu
können. Günstig ist es hierbei, wenn die Leerstelle
Führungselemente aufweist, die in einem Abstand vor dem Halterahmen enden, so daß die jeweils in diesen
einzuschiebende Form über einen entsprechend breiten
Spalt hinübergeschoben wird.

In diesem Zusammenhang hat es sich als vorteilhaft
herausgestellt, die Formen der Vorschubeinrichtung
einzeln und in einer zur Arbeitsrichtung derselben
rechtwinkligen Richtung zuzuführen.

Nachfolgend wird eine bevorzugte Ausführungsform der
Erfindung anhand einer Zeichnung näher beschrieben.
Im einzelnen zeigen:

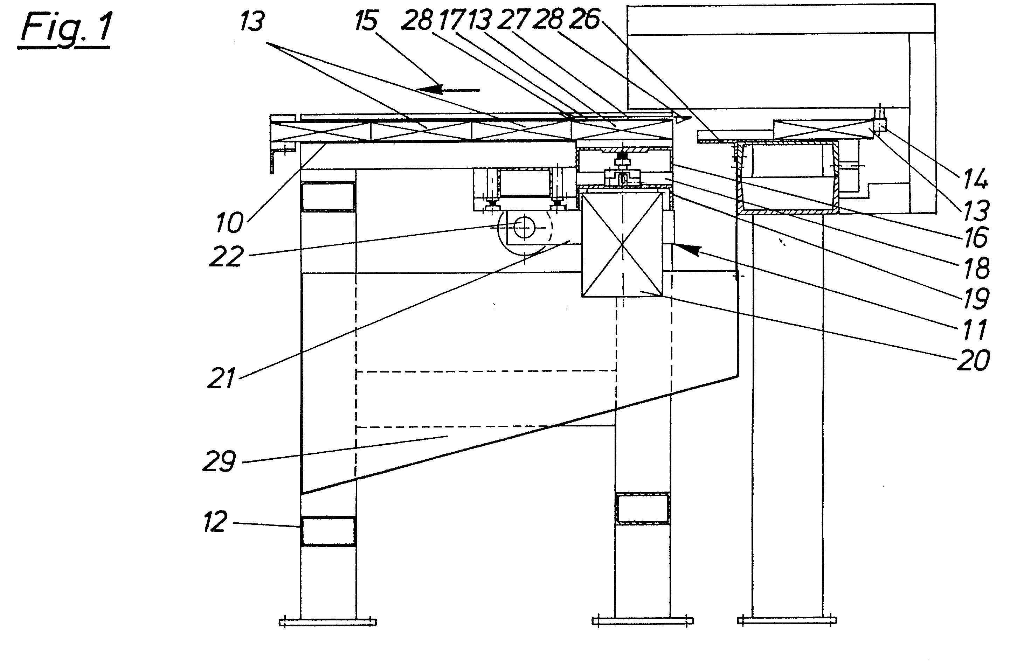

Fig. 1 eine Seitenansicht der Anlage im Bereich
       der Wendeeinrichtung, teilweise als Schnitt;

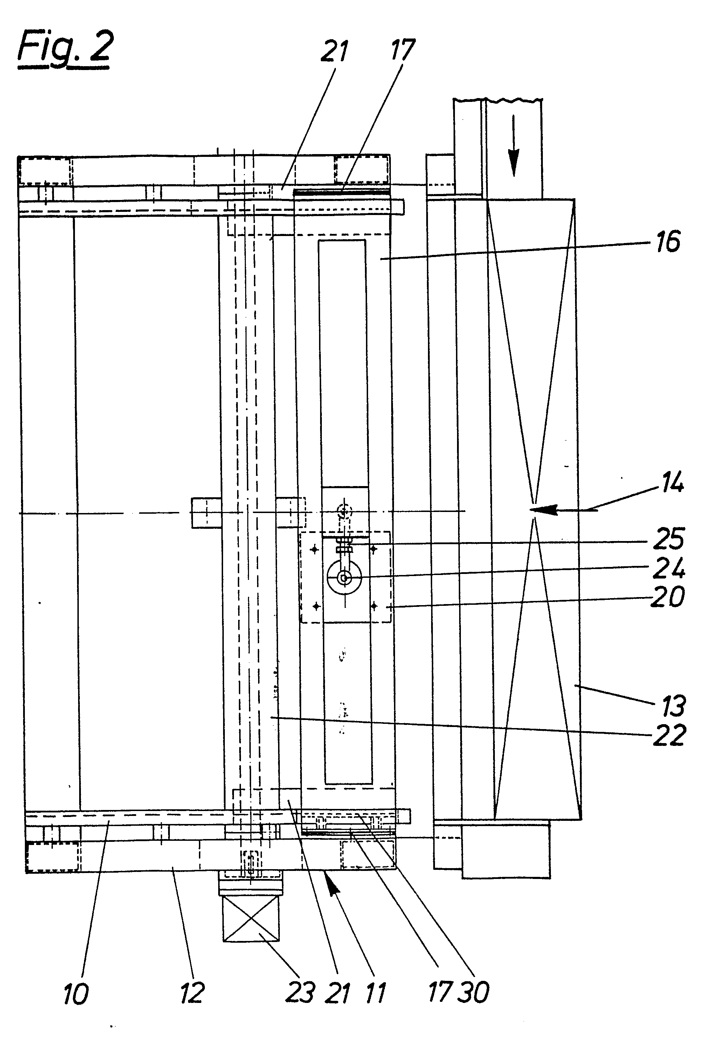

Fig. 2 eine Draufsicht auf die Wendeeinrichtung;

Fig. 3 in schematischer Darstellung die Folge
b i s   der einzelnen Arbeitsabläufe in der
Fig. 8 Wendeeinrichtung.

Im Verlauf einer Transportbahn 10 ist eine mit der
allgemeinen Bezugsziffer 11 bezeichnete Wendeeinrichtung 11 angeordnet, die beide auf einem Konstruktionsrahmen 12 ruhen. Einzelne Formen 13 werden
der Wendeeinrichtung 11 mittels einer Vorschubeinrichtung 14 zugeführt.

            Während die Arbeitsrichtung der Vorschubeinrichtung 14 und damit
die Transportrichtung auf der Transportbahn 10 in
Richtung eines Pfeiles 15 verlaufen, werden die Formen 13 der Vorschubeinrichtung 14 in einer hierzu
rechtwinkligen Richtung einzeln zugeführt.

0156324

Die Wendeeinrichtung 11 hat einen Halterahmen 16, dessen
wesentliche Bestandteile zwei U-förmige Führungsschienen 17
sind. Diese verlaufen parallel zur Transportrichtung und umgreifen die sich in dieser Richtung erstreckenden Randbereiche der
Formen 13 an beiden Seiten der Transportbahn 10 jeweils von
oben und von unten. Jeweils eine der Führungsschienen 17
enthält eine federbeaufschlagte Druckleiste 30, die ein kraftschlüssiges Halten der Form 13 bewirkt und gleichzeitig
eine Schwingung der Form 13 relativ zu dem schwingfähigen
Halterahmen 16 verhindert. Der Halterahmen 16 ist mittels
zweier dünner, aus Federstahl bestehender Bleche 18 auf
einem Grundrahmen 19 schwingfähig abgestützt. Der Grundrahmen
19 wiederum dient zur Befestigung eines Rüttlers 20 und sitzt
auf Tragarmen 21, deren Enden mit einer Welle 22 drehfest
verbunden sind. Diese kann durch einen hydraulischen
Motor 23 in Drehung versetzt werden.

Der Rüttler 20 hat einen Motor, auf dessen Abtriebswelle 24
eine Pleuelstange 25 gelagert ist. Das andere Ende derselben ist mit der Unterseite des Halterahmens 16 verbunden.
Da sich die Pleuelstange 25 in einer quer zur Transportrichtung verlaufenden Richtung erstreckt, fällt auch
die Richtung der vom Rüttler 20 erzeugten Schwingungsamplitude mit dieser Richtung zumindest angenähert zusammen.

Die Welle 22 liegt unterhalb der Transportbahnebene
und an einer Stelle, die in Transportrichtung gesehen zur Lage des Halterahmens 16 versetzt ist.
Damit liegt die Welle 22 etwa unterhalb der in
gleicher Richtung verlaufenden Mittelachse der
nächstfolgenden Form.

Vor der Wendeeinrichtung 11 befindet sich eine Leerstelle, deren Länge in Transportrichtung gesehen einer Formenlänge entspricht und die teilweise an beiden
Seiten durch je ein Führungselement 26 von L-förmigem
Querschnitt überbrückt ist. Die Führungselemente 26
enden in einem Abstand vor dem Halterahmen 16, der so
groß ist, daß der Halterahmen 16 beim Schwenken einen
ausreichend großen Freiraum hat.

Unterhalb der Welle 22 und der übrigen Teile der Wendeeinrichtung 11 befindet sich ein Auffangbehälter 29 zum
Auffangen der aus den Formen 13 jeweils entfernten Schokoladenmasse.

Auf die Oberseite des jeweils oberen Schenkels einer
U-förmigen Führungsschiene 17 ist eine Federspange 27
aufgesetzt, die an jedem Ende mit einem Anschlag 28 versehen ist. Die Federspangen 27 sind etwa im Bereich
ihrer halben Länge auf die oberen Schenkel der Führungsschienen 17 aufgeschraubt oder auf andere Weise an dieser Stelle befestigt, so daß ihre Enden in einer vertikalen Ebene federnd nach oben ausweichen können.

Die Anschläge 28 haben an ihrer Unterseite einen
kurvenförmigen Verlauf. Im allgemeinen verläuft
die Unterseite        also in Richtung auf das zugeordnete Spangen- beziehungsweise Anschlagende schräg
nach oben. Sofern an einer Federspange 27 äußere Kräfte
nicht angreifen, ragen die Anschläge 28 in die Höhe des
U-förmigen Querschnitts der Führungsschienen 17 herab,
so daß eine in den Führungsschienen 17 gehaltene Form
13 weder zu der einen noch zu der anderen Seite aus dem
Halterahmen 16 auswandern kann.

Beim Einschieben einer Form 13 in den Halterahmen 16
läuft die Form auf den in der Zeichnung rechten An-

schlag 28 der Feberspange 27 auf und hebt diesen Anschlag 28 auf ihre Oberseite, auf der er mit dem
weiteren Vorschub der Form 13 entlanggleitet, bis
diese vom Halterahmen 16 vollständig aufgenommen ist.
Der Anschlag 28 geht dann in seine Ausgangsstellung
zurück. Sobald der Halterahmen 16 im Uhrzeigersinn
um 180° verschwenkt wird, kann der in der Zeichnung
linke Anschlag 28, der bis dahin auf einer die benachbarte Form 13 haltenden Führungsschiene 17 aufgelegen
hat, in seine Ruhestellung zurückkehren, so daß die
Form 13 auch an dieser Seite gesichert ist. Beim Rückwenden in die Transportbahnebene wird sich der Anschlag
28 auf der Führungsschiene 17 abstützen und hierdurch
angehoben werden.

Nachfolgend sollen unter Bezugnahme auf die Figuren
3 bis 8 die in der Wendeeinrichtung 11 stattfindenden
Arbeitsvorgänge im einzelnen erläutert werden.

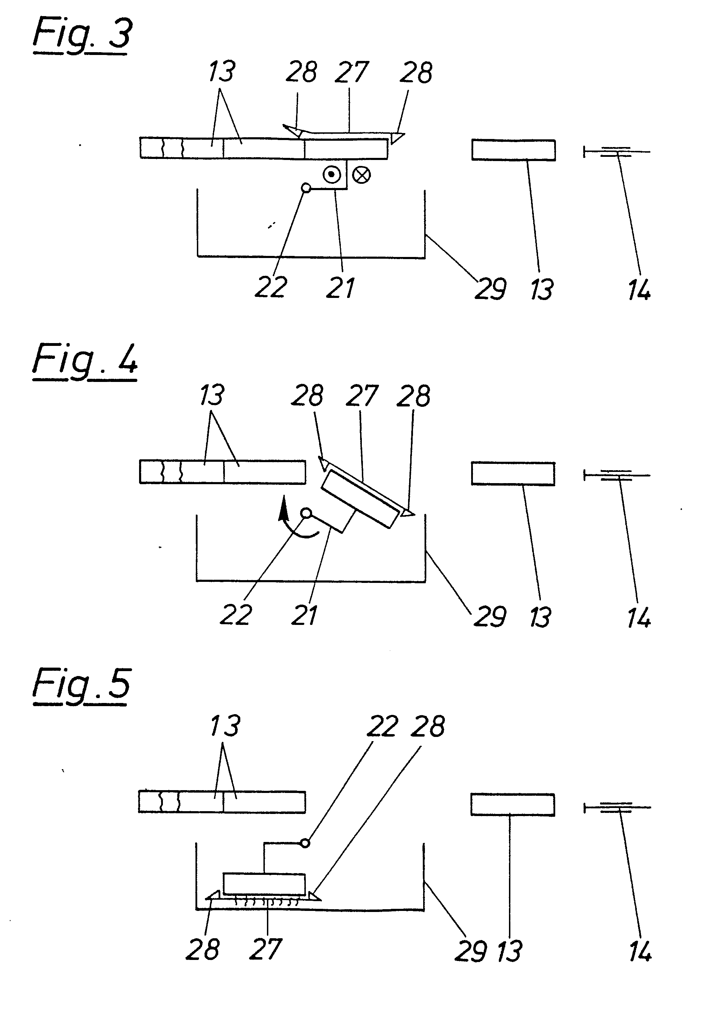

Fig. 3 zeigt eine in der Wendeeinrichtung 11 befindliche Form 13 nach dem Einschieben. Die Vorschubeinrichtung 14 ist bereits in ihre Ausgangsstellung zurückgekehrt, so daß ihr eine weitere Form 13 zugeführt werden konnte. Durch Betätigen des Rüttlers 20
wird die flüssige Schokolade in der im Halterahmen
16 befindlichen Form 13 entgast.

Anschließend wird der Motor 23 betätigt, so daß die
Welle 22 im Uhrzeigersinn um 180° gedreht wird. Der
Halterahmen 16 wird nach unten aus der Transportbahn
10 herausgeschwenkt (Fig. 4 und 5).

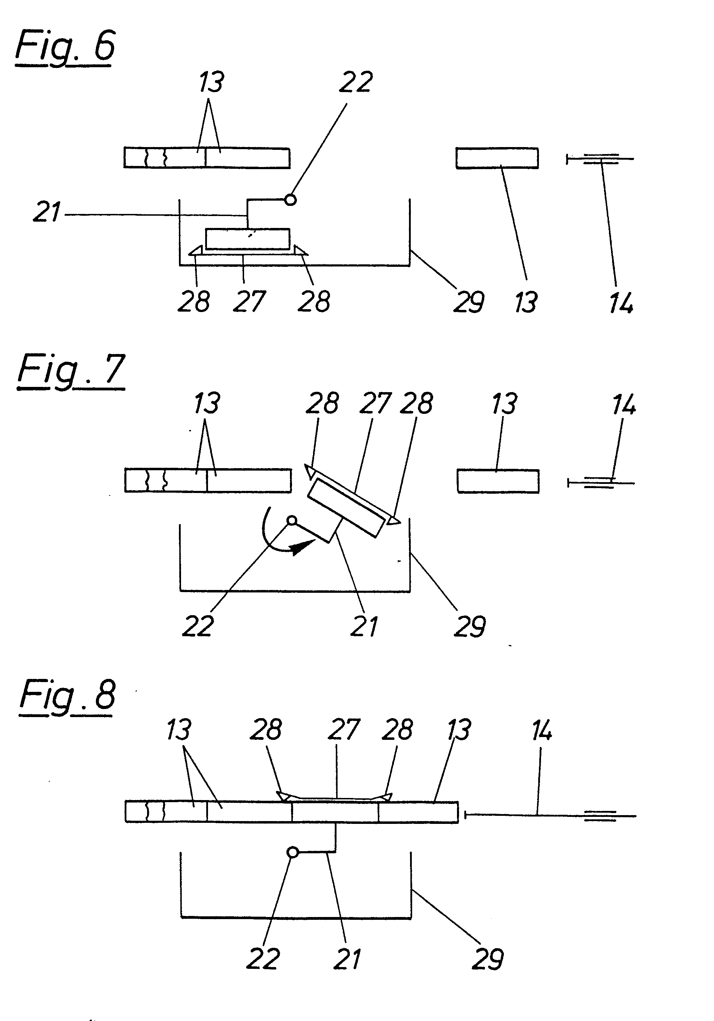

Jetzt wird der Rüttler 20 erneut eingeschaltet. Während
an der Wandung der Formnester eine Schokoladenschicht
von bestimmter Stärke haften bleibt, wird der übrige Teil der Schokolade mittels der vom Rüttler 20 erzeugten Schwingungen herausgeschleudert und von dem
Auffangbehälter 29 aufgenommen. Die Form 13 verbleibt in dieser Stellung, bis die Schokolade in
ausreichendem Maße abgetropft ist (Fig. 6).

Durch erneute Betätigung des Motors 23 wird das
Rückwenden der im Halterahmen 16 befindlichen Form
13 veranlaßt (Fig. 7). Sobald der Halterahmen 16
sich wieder in der Transportbahnebene befindet,
wird die Vorschubeinrichtung 14 betätigt, die die
nächste Form 13 in den Halterahmen 16 hineinschiebt
und dabei die bisher im Halterahmen 16 befindliche
Form 13 mit den übrigen Formen 13 in Richtung des
Pfeiles 15 weiterdrückt. Sobald die nächste Form 13
vollständig vom Halterahmen 16 aufgenommen ist,
schnappt der, in der Zeichnung rechte Anschlag 28
der Federspange 27 nach unten. Die Vorschubeinrichtung 14 kehrt in ihre Ausgangsstellung zurück.

Die bisher beschriebenen Vorgänge setzen sich in entsprechender Weise fort.

Dipl.-Ing. Dr. jur. Alfred W. Meyer

Patentanwalt

Zugelassener Vertreter beim Europäischen Patentamt

D 4000 Düsseldorf 1    19.3.1985
Schwanenmarkt    0156324
Telefon: (02 11) 32 60 80
Telegramme: Meypat
Telex: 8 58 2282 mypa d

Mein Zeichen    6518 A 52 Eu

Aktenzeichen

Anmelder:    Gebr. Bindler Maschinenfabrik GmbH & Co.KG
Kölner Straße 102 - 106
5275 Bergneustadt/Rhld 1

A n s p r ü c h e :

1. Anlage zum Herstellen von Schokoladen-Artikeln,
mit auf einer Transportbahn herangeführten Formen,
deren Formennester mit Schokoladenmasse gefüllt
sind, und mit im Verlauf der Transportbahn vorgesehenen Arbeitsstationen zum Rütteln, Wenden, Ausschleudern, Rückwenden und Reinigen der Formen, unter Anwendung eines Rüttlers und einer Wendeeinrichtung, in der jeweils eine Form auf einem in
der Transportebene befindlichen Halterahmen festgehalten und mit diesem um 180$^{\mathrm{o}}$ gewendet wird, dadurch gekennzeichnet, daß das Entgasen, Wenden,
Ausschleudern und Rückwenden in einer einzigen,
den Rüttler (20) aufweisenden Wendeeinrichtung
(11) erfolgt, deren Halterahmen (16) nach dem Entgasen um eine horizontale Achse (22) aus der Transportbahnebene heraus nach unten schwenkbar und nach
dem Ausschleudern in die Ausgangslage rückschwenkbar
ist.

2. Anlage nach Anspruch 1, dadurch gekennzeichnet,
daß die Schwenkachse (22) unterhalb der Transportbahn (10) und in einer zur Vorschubrichtung
querverlaufenden Richtung angeordnet ist.

3. Anlage nach Anspruch 2, dadurch gekennzeichnet,
daß die Schwenkachse (22) gegenüber demjenigen
Bereich, den der Halterahmen (16) in der Transportbahnebene einnimmt, in Transportrichtung versetzt angeordnet ist.

4. Anlage nach einem der vorherigen Ansprüche, dadurch gekennzeichnet, daß der Halterahmen (16)
mittels federnder Elemente (18) auf einem Grundrahmen (19) abgestützt ist und daß der Rüttler
(20) am Grundrahmen (19) befestigt ist und mit
seinem in Schwingungen versetzten Teil (25) am
Halterahmen (16) angreift.

5. Anlage nach einem der vorherigen Ansprüche, dadurch gekennzeichnet, daß zumindest der wesentliche Anteil der vom Rüttler (20) erzeugten
Schwingungsamplitude in einer horizontalen Ebene
und so verläuft, daß die Schwingungsamplitude
quer zur Transportrichtung gerichtet ist.

6. Anlage nach Anspruch 4 oder 5, dadurch gekennzeichnet, daß die federnden Elemente durch dünne
Federstahlbleche (18) gebildet sind, die den Halterahmen (16) tragen.

7. Anlage nach einem der vorherigen Ansprüche, dadurch gekennzeichnet, daß der Halterahmen (16)
zwei U-förmige Führungsschienen (17) aufweist,
die eine Form (13) jeweils an ihren zur Transportrichtung parallelen Seiten im Randbereich
umgreifen, und daß zumindest einer der horizontalen Schenkel einer Führungsschiene (17) an beiden Enden jeweils einen beweglichen Anschlag (28)
aufweist, der die form (13) hintergreift.

8. Anlage zum Herstellen von Schokoladen-Artikeln, insbesondere nach Anspruch 7, dadurch gekennzeichnet, daß auf den
oberen Schenkel einer die Form (13) umgreifenden Führungsschiene (17) eine Federspange (27) aufgesetzt ist, daß die
Federspange (27) an ihren Enden jeweils mit einem in Höhe
des U-förmigen Querschnitts der Führungsschienen (17) befindlichen Anschlag (28) versehen ist und daß die Anschläge
(28) jeweils eine nach unten gerichtete, in Richtung auf
das Anschlagende schräg nach oben geneigte Gleitfläche bilden.

9. Anlage nach einem der vorherigen Ansprüche, dadurch gekennzeichnet, daß die jeweils in der Wendeeinrichtung (11)
befindliche Form (13) nach dem letzten Arbeitsgang durch
das Einschieben der nächstfolgenden Form (13) aus der
Wendeeinrichtung (11) herausgeschoben wird.

10. Anlage nach einem der vorherigen Ansprüche, dadurch gekennzeichnet, daß zwischen einer das Einschieben einer
Form (13) in den Halterahmen (16) bewirkenden Vorschubeinrichtung (14) und dem Halterahmen (16) in der Transportbahn
(10) eine Leerstelle vorgesehen ist, deren Länge der Länge
einer Form (13) entspricht, und daß der Vorschub jeweils
der Länge zweier Formen (13) entspricht.

11. Anlage nach Anspruch 10, dadurch gekennzeichnet, daß die
Leerstelle Führungselemente (26) aufweist, die in einem
Abstand vor dem Halterahmen (16) enden.

12. Anlage nach Anspruch 10 oder 11, dadurch gekennzeichnet,
daß die Formen (13) der Vorschubeinrichtung (14)
einzeln und in einer zur Arbeitsrichtung derselben
rechtwinkligen Richtung zugeführt werden.

_Fig. 1_

13     15   28 17 13 27 28 26

10

22

21

29

12

14
13
16
18
19
11
20

114

0156324

Fig. 2

0156324

## Fig. 3

13  28  27  28

22  21  29  13  14

## Fig. 4

13  28  27  28

22  21  29  13  14

## Fig. 5

13  22  28

28  27  29  13  14

414

0156324

## Fig. 6

13    22

21

28  27  28    29  13  14

## Fig. 7

13    28  27  28    13    14

22    21    29

## Fig. 8

13  28  27  28  13    14

22  21    29